# EUROPEAN PATENT APPLICATION

(11) **EP 3 508 525 A1**
(43) Date of publication of application: **10.07.2019**
(21) Application number: 17845872.5
(22) Date of filing: 29.06.2017
(51) Int. Cl.: C08L 9/00, C08K 3/22, C08L 91/00, C08L 91/06, C08L 7/00, C08L 11/00, C08L 91/02

(54) **RUBBER COMPOSITION**

(30) Priority: 31.08.2016 JP 2016169603
(71) Applicant: Bridgestone Corporation, Tokyo 104-8340 (JP)
(72) Inventor: SAKAKURA Shinji, Tokyo 104-8340 (JP)
(74) Representative: Oxley, Robin John George
(86) International application number: PCT/JP2017/024026
(87) International publication number: WO 2018/042862

(57) **Abstract**

Provided is a rubber composition which is excellent in ozone resistance and capable of suppressing, when used in a rubber product, deterioration of appearance property of the rubber product, and is also high in adhesiveness with a metal member. The rubber composition contains: a rubber component including diene-based rubber; wax; and calcium oxide, in which: the wax is contained 1 part by mass or more per 100 parts by mass of the rubber component; and the calcium oxide is contained 0.5 parts by mass or more and 10 parts by mass or less per 100 parts by mass of the rubber component.

## Description

### TECHNICAL FIELD

A rubber composition is disclosed herein.

### BACKGROUND

In general, rubber is susceptible, by its nature, to cracks caused by surface deterioration resulting from exposure to ozone in the atmosphere. With this in view, for rubber members such as, for example, an outer surface rubber layer of a hose, a side wall rubber or a tread rubber of a tire, which are likely to be exposed to the atmosphere, an antiozonant is generally compounded in preparing a rubber composition for the rubber members using a rubber component and various additives, to thereby prevent deterioration from being caused by ozone.

Here, examples of antiozonant include, for example, an amine-based antiozonant and wax. These antiozonants would further contribute to improving ozone resistance of the rubber member when compounded by a larger amount. However, when compounded excessively, the antiozonant precipitates on the surface of the rubber member (i.e., bloom), which may lead to deterioration of appearance. Under the aforementioned cicumstances, various studies have been made to allow the antioxidant to fully probide an effect of improving ozone resistance while suppressing deterioration in appearance property of the rubber member.

For example, as a technology to be adopted in a case where an amine-based age resistor is used as the antiozonant, JP2011063718A (PTL 1) discloses a rubber composition obtained by compounding, into a rubber component including a diene-based rubber, a mixture obtained by mixing in advance an amine-based age resistor, a phenol-based compound, and a white filler at predetermined ratios, to thereby retain the ozone resistance and appearance property thereof at high level.

### CITATION LIST

### Patent Literature

PTL 1: JP2011063718A

### SUMMARY

### (Technical Problem)

Meanwhile, there is also a need for a rubber member which still uses wax as an antioxidant, but retains both the ozone resistance and the appearance property at high level. However, such technology has yet not been fully investigated sufficiently. Here, wax tends to more readily precipitate as compared to an amine-based age resistor. Thus, wax may precipitate on the surface of the rubber member to form a wax layer, and the wax layer thus formed may peel off from the surface, leading to significant deterioration of the appearance thereof. Therefore, some measures need be taken to avoid such circumstances.

Further, the aforementioned outer surface rubber layer of a hose is often laminated on the outside of a reinforcing layer formed of, for example, brass-plated wire. In other words, the aforementioned rubber member is required to retain both the ozone resistance and the appearance property at high level, as well as having high adhesiveness to a metal member in order to retain durability of the rubber product such as a hose.

It could therefore be helpful to provide a rubber composition which is excellent in ozone resistance and capable of, when used in a rubber product, suppressing deterioration in appearance property of the rubber product, and also high in adhesiveness to a metal member.

### (Solution to Problem)

We have made extensive studies to surprisingly find that a predetermined amount of calcium oxide may be contained in the rubber composition along with wax, so as to at least retain high ozone resistance arising from the wax while suppressing blooming of the wax, to thereby suppress deterioration in appearance property of the rubber product.

That is, the disclosed rubber composition contains a rubber component including diene-based rubber; wax; and calcium oxide, in which the wax is contained at 1 part by mass or more per 100 parts by mass of the rubber component; and
the calcium oxide is contained at 0.5 parts by mass or more and 10 parts by mass or less per 100 parts by mass of the rubber component.

### (Advantageous Effect)

The disclosed rubber composition is excellent in ozone resistance and capable of suppressing, when used in a rubber product, deterioration of appearance property of the rubber product, as well as having high adhesiveness to a metal member.

### DETAILED DESCRIPTION

Hereinafter, the disclosed rubber composition is described in detail with reference to an embodiment.

The disclosed rubber composition according to one embodiment (which may also be simply referred to as "disclosed rubber composition" hereinafter) contains at least: a rubber component including diene-based rubber; wax; and a calcium oxide, and further contains an oil component, factice, and other components as necessary.

### <Rubber Component>

The disclosed rubber composition contains a rubber component including diene-based rubber. The rubber composition containing diene-based rubber allows for maintaining basic resistance to fracture. Examples of the diene-based rubber may include: natural rubber; butadiene rubber; styrene-butadiene rubber; isoprene rubber; chloroprene rubber; ethylene-propylene-diene copolymer; and acrylonitrile-butadiene rubber, which may each be used alone or in combination of two or more.

In particular, the disclosed rubber composition may preferably contain chloroprene rubber. The rubber composition containing chloroprene rubber can further improve ozone resistance. Further, chloroprene rubber, which has polarity and thus is excellent in oil resistance, may suitably be used in a rubber composition for use in a rubber product such as a hydraulic hose which is required to have oil resistance. The proportion of chloroprene rubber in the rubber component contained in the disclosed rubber composition is not particularly limited and may be selected as appropriate depending on the purpose; for example, when the rubber composition is for use in an outer surface rubber layer of a hose, chloriprene rubber may be contained at preferably 30 mass% or more, more preferably 50 mass% or more, and also preferably 100 mass% or less.

The disclosed rubber composition may also preferably contain styrene-butadiene rubber. The use of styrene-butadiene rubber as the rubber component contained in the rubber composition can reduce manufacturing cost. The proportion of styrene-butadiene rubber in the rubber component contained in the disclosed rubber composition is not particularly limited and may be selected as appropriate depending on the purpose; for example, when the rubber composition is for use in an outer surface rubber layer of a hose, styrene-butadiene rubber may be contained at preferably 15 mass% or more, more preferably 30 mass% or more, and also preferably 70 mass% or less.

Further, the disclosed rubber composition may also preferably contain butadiene rubber. The rubber composition containing butadiene rubber can improve wear resistance. The proportion of butadiene rubber in the rubber component contained in the disclosed rubber composition is not particularly limited and may be selected as appropriate depending on the purpose; for example, when the rubber composition is for use in an outer surface rubber layer of a hose, butadiene rubber may be contained at preferably 10 mass% or more, and also preferably 30 mass% or less.

Here, the disclosed rubber composition may rather contain non-diene-based rubber. Examples of the non-diene-based rubber may include: butyl rubber; halogenated butyl rubber; and silicone rubber, which may each be used alone or in combination of two or more.

The proportion of diene-based rubber in the rubber component contained in the disclosed rubber composition is not particularly limited and may be selected as appropriate depending on the purpose; in view of fully ensuring basic resistance to fracture, diene-based rubber may be contained at preferably 90 mass% or more and more preferably 100 mass% (i.e., the rubber component may preferably be formed exclusively of diene-based rubber).

### <Wax>

The disclosed rubber composition contains wax. The rubber composition containing wax allows for improving ozone resistance.

Examples of the wax may include: paraffin wax and microcrystalline wax.

The disclosed rubber composition contains wax at 1 part by mass or more per 100 parts by mass of the rubber component. A rubber composition containing wax at less than 1 part by mass per 100 parts by mass of the rubber component fails to provide an effect of improving ozone resistance. The disclosed rubber composition may contain wax at preferably 1.5 parts by mass or more per 100 parts by mass of the rubber component in terms of improving ozone resistance.

Further, the disclosed rubber composition may contain wax at preferably 5 parts by mass or less per 100 parts by mass of the rubber component. The rubber composition containing wax at 5 parts by mass or less per 100 parts by mass of the rubber component allows for fully obtaining an effect of suppressing wax bloom from being caused by calcium oxide to be described later and thus further favorably maintaining appearance property of the rubber product. From the same point of view, the disclosed rubber composition may contain wax preferably at 4.0 parts by mass or less.

### <Calcium Oxide>

The disclosed rubber composition contains calcium oxide. In the rubber industry, calcium oxide has generally been used as an anti-foaming agent, which would be limitedly compounded into a rubber composition as long as there is a need for performing continuous vulcanization without pressurization (for example, salt bath vulcanization) or vulcanization without using a mold during the manufacture of a rubber product. However, we have surprisingly found that calcium oxide may simultaneously be contained in addition to wax already contained in the rubber composition, so as to suppress bloom of the wax without impairing the high ozone resistance resulting from the wax, to thereby suppress deterioration of the appearance property of the rubber product. It is worth noting that, for example, silica or calcium carbonate, even when used in place of calcium oxide, cannot provide an effect of suppressing wax bloom, not to mention an effect of suppressing deterioration of appearance property of the rubber product.

Calcium oxide may be in any shape or size without specifically limited, which can be chosen as appropriate depending on the purpose.

The disclosed rubber composition contains calcium oxide at 0.5 parts by mass or more and 10 parts by mass or less per 100 parts by mass of the rubber component. A rubber composition containing calcium oxide at less than 0.5 parts by mass per 100 parts by mass of the rubber component fails to fully obtain an effect of suppressing wax bloom, which leads to deterioration of the appearance property of the rubber product. Alternatively, a rubber composition containing calcium oxide at more than 10 parts by mass per 100 parts by mass of the rubber component may cause deterioration in adhesiveness to a metal member such as brass-plated wire when the rubber composition is used in an outer surface rubber layer of a hose for example.

The disclosed rubber composition contains calcium oxide at preferably 5 parts by mass or less, more preferably 2.5 parts by mass, per 100 parts by mass of the rubber component, in terms of maintaining high adhesiveness to a metal member such as brass-plated wire.

### <Oil Component>

The disclosed rubber composition may further contain an oil component, in addition to the aforementioned rubber component, wax, and calcium oxide.

Examples of the oil component may include: aromatic oil; paraffinic-base oil; and naphthenic-base oil.

The content of the oil component in the disclosed rubber composition, which is not particularly limited and may be selected as appropriate depending on the purpose, may preferably be 3 parts by mass or more and 30 parts by mass or less per 100 parts by mass of the rubber component. The rubber composition containing the oil component at 3 parts by mass or more per 100 parts by mass of the rubber component can suitably soften the rubber composition, to thereby improve processability. The rubber composition containing the oil component at 30 parts by mass or less per 100 parts by mass of the rubber component can prevent excessive softening of the rubber composition, to thereby suppress deterioration in processability. From the same point of view, the rubber composition may contain the oil component at 20 parts by mass or less per 100 parts by mass of the rubber component.

Here, the oil component to be contained in the disclosed rubber composition may preferably include aromatic oil. In other words, the disclosed rubber composition may more preferably further contain an oil component including aromatic oil. The rubber composition containing aromatic oil allows for further increasing the effect of suppressing wax bloom and thus further favorably maintaining appearance property of the rubber product.

When the rubber composition uses the oil component, the proportion of aromatic oil in the oil component, which is not particularly limited and may be selected as appropriate depending on the purpose, may preferably be 30 mass% or more. When the proportion of aromatic oil in the oil component contained in the rubber composition is 30 mass% or more, wax bloom can be suppressed more effectively, which allows for further favorably maintaining appearance property of the rubber product. From the same point of view, the proportion of the aromatic oil in the oil component is preferably 50 mass% or more and more preferably 100 mass% (i.e., the oil component is formed exclusively of aromatic oil).

On the other hand, the use of aromatic oil and other oils in combination as the oil component may advantageously suppress deterioration in roll adhesiveness of the rubber composition.

### <Factice>

The disclosed rubber composition may further contain factice. Here, factice is a component also referred to as "sub" (as an abbreviation of "rubber substitute"), which can be obtained by, for example, heating and vulcanizing fats and oils such as vegetable oil or fish oil by a sulfur-containing compound such as sulfur or sulfur chloride. The rubber composition containing factice allows for suppressing bloom (referred to as "whitening phenomenon") originating from calcium oxide and/or organic cobalt compound even when the rubber composition is subjected to, for example, salt bath vulcanization. As a result, appearance property of the rubber product may further favorably be maintained.

The content of the factice in the disclosed rubber composition, which is not particularly limited and may be selected as appropriate depending on the purpose, may preferably be 1 part by mass or more and 10 parts by mass or less per 100 parts by mass of the rubber component. The rubber composition containing factice at 1 part by mass or more per 100 parts by mass of the rubber component can reliably ensure the effect of suppressing the whitening phenomenon. Further, the rubber composition containing factice at 10 parts by mass or less per 100 parts by mass of the rubber component can fully ensure high fracture resistance of the vulcanized rubber composition. From the same point of view, the content of factice in the rubber composition is preferably 3 parts by mass or more and preferably 6 parts by mass or less per 100 parts by mass of the rubber component.

Here, examples of factice may include: sulfur factice; sulfur chloride factice; and sulfurless factice. Examples of commertially-available sulfur factice may include "Golden Factice" group, "Brown Factice" group, "Neo Factice" group manufactured by Tenma Factice Mfg. Co. LTD. Examples of commertially-available sulfur chloride factice may include "White Factice" group, "Amber Factice" group manufactured by Tenma Factice Mfg. Co. LTD. Of those, sulfur factice may preferably be used, and "Brown Factice" may further preferably be used, in terms of more effectively suppressing whitening phenomenon.

### <Other Components>

The disclosed rubber composition may further contain additives, as necessary, in addition to those mentioned above. Examples of such additives may include: a vulcanizing agent such as sulfur; a vulcanization accelerator; a retarder (anti-scorch agent); a reinforcing filler such as carbon black and silica; a plasticizer; an antioxidant; a lubricant; an ultraviolet absorbing agent; a dispersant; a compatibilizing agent; a homogenizing agent; a stearic acid; and zinc flower.

When the disclosed rubber composition contains chloroprene rubber as the rubber component, the rubber composition may preferably further contain a basic inorganic oxide such as magnesium oxide. In this case, the basic inorganic oxide may serve as an acid receiver.

Further, the disclosed rubber composition may preferably contain organic acid cobalt compound such as cobalt naphenate, cobalt neodecanoate, or cobalt stearate, in terms of further improving adhesiveness to a metal member such as brass-plated wire. Here, the content of the organic acid cobalt compound in the rubber composition is preferably 0.5 parts by mass or more per 100 parts by mass of the rubber component in terms of fully obtaining the effect of improving adhesiveness to a metal member, and preferably 5.0 parts by mass or less per 100 parts by mass of the rubber component in terms of suppressing deterioration of heat aging resistance.

The organic acid cobalt compounds may each be used alone or in combination of two or more. In particular, in terms of suppressing excessive increase of roll adhesion, cobalt neodecanoate and cobalt stearate may be combined for use as the organic acid cobalt compound.

### <Manufacture of Rubber Composition>

The disclosed rubber composition may be obtained by mixing the aforementioned components using, for example, a kneading machine such as an open-type mixing mill, Banbury mixer as an internal mixer, or a kneader.

### <Application of Rubber Composition>

The application of the disclosed rubber composition is not particularly limited, and the disclosed rubber composition may suitably be used in various parts in rubber products including: a hose such as a hydraulic hose; a tire; a conveyor belt; a rubber isolator; and an air cushion. In particular, the disclosed rubber composition, which is excellent in ozone resistance and capable of suppressing deterioration of the appearance property of the rubber products, as well as having high adhesiveness to a metal member, may preferably be used for an outer surface rubber layer (outer sheath) of a hose such as a hydraulic hose. A hose having an outer surface rubber layer formed with the disclosed rubber composition is excellent in ozone resistance, excellent in durability due to high adhesiveness of the outer surface rubber layer to brass-plated wire, and capable of suppressing wax bloom so as to favorably maintain the appearance property.

### EXAMPLES

Hereinafter, the disclosed rubber composition is described in further detail with reference to examples; however, the disclosed rubber composition is in no way limited by the following examples, and may be altered as appropriate without departing from the gist thereof.

Bunbury mixer was used to prepare unvulcanized rubber compositions according to the formulations of Tables 1 to 3. The unvulcanized rubber compositions thus prepared were used to evaluate for the state of appearance, the amount of wax bloom, ozone resistance, adhesiveness to brass-plated wire, and whitening caused during salt bath vulcanization, in accordance with the follwoing procedure.

### (Appearance Condition)

The unvulcanized rubber composition was cut into a sheet having a side of 150 mm and a thickness of 2 mm. Then, using a mold, the resulting sheet-like sample was vulcanized at 150°C for 60 minutes to obtain a vulcanized sample. Thereafter, the vulcanized sample thus obtained was placed in a constant temperature and constant humidity chamber adjusted to 35°C temperature and 70% humidity, and left for 30 days. Then, the vulcanized sample after being thus left was bent 180°, so as to fracture the precipitated wax layer. The fractured condition of the wax layer was observed to evaluate the appearance condition based on the following criteria. The results are shown in Tables 1 to 3.
- Striped cracks were observed but the wax layer hardly peeled off from the vulcanized sample ··· good
- The wax layer was cracked and a large amount of dandruff-like substance peeled off from the vulcanized sample ··· poor
- Intermediate between favorable and poor above ··· fair

### (Wax Bloom Amount)

The unvulcanized rubber composition was cut into a sheet having a side of 150 mm and a thickness of 2 mm. Then, using a mold, the resulting sheet-like sample was vulcanized at 150°C for 60 minutes to obtain a vulcanized sample. Thereafter, the vulcanized sample thus obtained was placed in a constant temperature and constant humidity chamber adjusted to 35°C temperature and 70% humidity, and left for 30 days. Then, the vulcanized sample after being thus left was cut out in a sheet having a width of 25 mm and a length of 150 mm, and wax having been precipitated on the surface thereof was scraped off. Then, the difference in weight of the sheet before and after scraping off the precipitated wax therefrom was measured as the amount of wax bloom. The results are shown in Tables 1 to 3.

### (Ozone Resistance)

The unvulcanized rubber composition was cut into a sheet having a side of 150 mm and a thickness of 2 mm. Then, using a mold, the resulting sheet-like sample was vulcanized at 150°C for 60 minutes to obtain a vulcanized sample. Thereafter, according to JIS K 6259 "Rubber, vulcanized or thermoplastic -Determination of ozone resistance-", the sample was subjected to exposure test for 168 hours, with ozone concentration of 50±5 pphm, temperature of 40±2°C, and tensile strain of 40±2%, and observed for whether any cut was caused by ozone crack. Then, it was evaluated as "normal" when no cut due to ozone crack was observed, whereas it was evaluated as "abnormal" when any cut was observed. The results are shown in Tables 1 to 3.

### (Adhesiveness to Brass-Plated Wire)

The unvulcanized rubber composition was shaped into a 10 mm square block shape and brass-plated wire of ϕ 0.60 mm × 50 mm length was placed in the center thereof, which was vulcanized at 150°C for 60 minutes. Then, the brass-plated wire was pulled out from the vulcanized sample and visually measured for the percentage (%) of rubber component-adhered area on the wire. For example, the percentage was determined as 100% when the wire surface was entirely covered with rubber, while determined as 0% when no rubber was adhered to the wire surface. The adhesiveness to brass-plated wire can be determined as favorable when the percentage (%) of the rubber component-adhered area is 80% or more. The results are shown in Tables 1 to 3.

### (Whitening caused during Salt Bath Vulcanization)

Salt (a mixture of potassium nitrate, sodium nitrite, and sodium nitrate) was put into a glass test tube, and heated to 190° and melted. Then, the unvulcanized rubber composition was immersed into the melted salt and vulcanized. Thereafter, the rubber composition was taken out from the salt, washed with water, and let cooled as being thus washed by water. The cooled rubber composition was visually observed and determined as "whitened" when whitening was confirmed while being determined as "not whitened" when no whitening was observed. The evaluation was performed only for Examples 18 and 26. The results are shown in Table 3. Here, the whitening can be considered to have been caused by rapid cooling due to the washing with water.

**[Table 1]**

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|
| rubber component | natural rubber *1 | 0 | 50 | 20 | 0 | 30 | 20 | 0 | 15 | 15 | 0 | 0 | 0 | 0 | 15 | 0 |
| | butadiene rubber *2 | 20 | 20 | 0 | 20 | 20 | 0 | 15 | 15 | 0 | 0 | 20 | 20 | 20 | 0 | 0 |
| | styrene-butadiene rubber *3 | 50 | 0 | 50 | 30 | 0 | 30 | 15 | 0 | 15 | 0 | 30 | 30 | 30 | 15 | 0 |
| | chloroprene rubber *4 | 30 | 30 | 30 | 50 | 50 | 50 | 70 | 70 | 70 | 100 | 50 | 50 | 50 | 70 | 100 |
| wax *5 | | 3 | 3 | 3 | 3 | 3 | 3 | 3 | 3 | 3 | 3 | 3 | 3 | 3 | 3 | 3 |
| calcium oxide *6 | | 5 | 5 | 5 | 5 | 5 | 5 | 5 | 5 | 5 | 5 | 0.5 | 2.5 | 10 | 5 | 5 |
| silica *7 | | 0 | 0 | 0 | 0 | 0 | 0 | 0 | 0 | 0 | 0 | 0 | 0 | 0 | 0 | 0 |
| calcium carbonate *8 | | 0 | 0 | 0 | 0 | 0 | 0 | 0 | 0 | 0 | 0 | 0 | 0 | 0 | 0 | 0 |
| oil component | aromatic oil *9 | 15 | 15 | 15 | 15 | 15 | 15 | 15 | 15 | 15 | 15 | 15 | 15 | 15 | 0 | 0 |
| | paraffinic-base oil *10 | 0 | 0 | 0 | 0 | 0 | 0 | 0 | 0 | 0 | 0 | 0 | 0 | 0 | 15 | 0 |
| | naphthene-base oil *11 | 0 | 0 | 0 | 0 | 0 | 0 | 0 | 0 | 0 | 0 | 0 | 0 | 0 | 0 | 15 |
| cobalt compound *12 | | 3 | 3 | 3 | 3 | 3 | 3 | 3 | 3 | 3 | 3 | 3 | 3 | 3 | 3 | 3 |
| magnesium oxide *13 | | 2 | 2 | 2 | 2 | 2 | 2 | 3 | 3 | 3 | 4 | 2 | 2 | 2 | 3 | 4 |
| carbon black *14 | | 50 | 50 | 50 | 50 | 50 | 50 | 50 | 50 | 50 | 50 | 50 | 50 | 50 | 50 | 50 |
| stearic acid *15 | | 1 | 1 | 1 | 1 | 1 | 1 | 1 | 1 | 1 | 1 | 1 | 1 | 1 | 1 | 1 |
| zinc flower *16 | | 5 | 5 | 5 | 5 | 5 | 5 | 5 | 5 | 5 | 5 | 5 | 5 | 5 | 5 | 5 |
| sulfur *17 | | 2 | 2 | 2 | 2 | 2 | 2 | 2 | 2 | 2 | 2 | 2 | 2 | 2 | 2 | 2 |
| age resistor *18 | | 2 | 2 | 2 | 2 | 2 | 2 | 2 | 2 | 2 | 2 | 2 | 2 | 2 | 2 | 2 |
| vulcanization accelerator *19 | | 1 | 1 | 1 | 1 | 1 | 1 | 1 | 1 | 1 | 1 | 1 | 1 | 1 | 1 | 1 |
| appearance condition | | good | good | good | good | good | good | good | good | good | good | good | good | good | fair | fair |
| wax bloom amount (mg) | | 1.1 | 0.9 | 0.8 | 1.0 | 1.1 | 0.9 | 1.2 | 1.1 | 1.1 | 0.8 | 1.5 | 1.1 | 0.8 | 3.2 | 2.8 |
| ozone resistance | | normal | normal | normal | normal | normal | normal | normal | normal | normal | normal | normal | normal | normal | normal | normal |
| adhesiveness to brass-plated wire (%) | | 90 | 100 | 95 | 100 | 100 | 95 | 100 | 100 | 100 | 95 | 100 | 100 | 85 | 100 | 95 |

**[Table 2]**

| | | Example | Example | Example | Example | Example | Example | Comp. Example | Comp. Example | Comp. Example | Comp. Example | Example | Example | Comp. Example | Example | Example |
|---|---|---|---|---|---|---|---|---|---|---|---|---|---|---|---|---|
| | | 16 | 17 | 18 | 19 | 20 | 21 | 1 | 2 | 3 | 4 | 22 | 23 | 5 | 24 | 25 |
| rubber component | natural rubber *1 | 0 | 0 | 0 | 0 | 0 | 100 | 0 | 0 | 0 | 0 | 0 | 0 | 0 | 0 | 0 |
| | butadiene rubber *2 | 20 | 20 | 20 | 0 | 100 | 0 | 20 | 20 | 20 | 20 | 20 | 20 | 20 | 20 | 20 |
| | styrene-butadiene rubber *3 | 30 | 30 | 30 | 100 | 0 | 0 | 30 | 30 | 30 | 30 | 30 | 30 | 30 | 30 | 30 |
| | chloroprene rubber *4 | 50 | 50 | 50 | 0 | 0 | 0 | 50 | 50 | 50 | 50 | 50 | 50 | 50 | 50 | 50 |
| wax *5 | | 3 | 3 | 3 | 3 | 3 | 3 | 3 | 3 | 3 | 3 | 1 | 5 | 0.5 | 7 | 3 |
| calcium oxide *6 | | 5 | 5 | 5 | 5 | 5 | 5 | 0 | 15 | 0 | 0 | 5 | 5 | 5 | 5 | 5 |
| silica *7 | | 0 | 0 | 0 | 0 | 0 | 0 | 0 | 0 | 5 | 0 | 0 | 0 | 0 | 0 | 0 |
| calcium carbonate *8 | | 0 | 0 | 0 | 0 | 0 | 0 | 0 | 0 | 0 | 5 | 0 | 0 | 0 | 0 | 0 |
| oil component | aromatic oil *99 | 5 | 7.5 | 7.5 | 15 | 15 | 15 | 15 | 15 | 15 | 15 | 15 | 15 | 15 | 15 | 3 |
| | paraffinic-base oil *10 | 5 | 0 | 7.5 | 0 | 0 | 0 | 0 | 0 | 0 | 0 | 0 | 0 | 0 | 0 | 6 |
| | naphthenic-base oil *11 | 5 | 7.5 | 0 | 0 | 0 | 0 | 0 | 0 | 0 | 0 | 0 | 0 | 0 | 0 | 6 |
| cobalt compound *12 | | 3 | 3 | 3 | 3 | 3 | 3 | 3 | 3 | 3 | 3 | 3 | 3 | 3 | 3 | 3 |
| magnesium oxide *13 | | 4 | 2 | 2 | 0 | 0 | 0 | 2 | 2 | 2 | 2 | 2 | 2 | 2 | 2 | 4 |
| carbon black *14 | | 50 | 50 | 50 | 50 | 50 | 50 | 50 | 50 | 50 | 50 | 50 | 50 | 50 | 50 | 50 |
| stearic acid *15 | | 1 | 1 | 1 | 1 | 1 | 1 | 1 | 1 | 1 | 1 | 1 | 1 | 1 | 1 | 1 |
| zinc flower *16 | | 5 | 5 | 5 | 5 | 5 | 5 | 5 | 5 | 5 | 5 | 5 | 5 | 5 | 5 | 5 |
| sulfur *17 | | 2 | 2 | 2 | 2 | 2 | 2 | 2 | 2 | 2 | 2 | 2 | 2 | 2 | 2 | 2 |
| age resistor *18 | | 2 | 2 | 2 | 2 | 2 | 2 | 2 | 2 | 2 | 2 | 2 | 2 | 2 | 2 | 2 |
| vulcanization accelerator *19 | | 1 | 1 | 1 | 1 | 1 | 1 | 1 | 1 | 1 | 1 | 1 | 1 | 1 | 1 | 1 |
| appearance condition | | good | good | good | good | good | good | poor | good | poor | poor | good | fair | good | fair | fair |
| wax bloom amount (mg) | | 1.4 | 1.2 | 1.6 | 1.0 | 1.2 | 0.9 | 13.5 | 0.9 | 11.5 | 12.8 | 0.8 | 3.1 | 0.3 | 5.8 | 2.2 |
| ozone resistance | | normal | normal | normal | normal | normal | normal | normal | normal | normal | normal | normal | normal | abnormal | normal | normal |
| adhesiveness to brass-plated wire (%) | | 100 | 95 | 100 | 95 | 100 | 100 | 100 | 30 | 100 | 100 | 100 | 95 | 100 | 95 | 100 |

**[Table 3]**

| | | Example 18 | Example 26 |
|---|---|---|---|
| rubber component | natural rubber *1 | 0 | 0 |
| | butadiene rubber *2 | 20 | 20 |
| | styrene-butadiene rubber *3 | 30 | 30 |
| | chloroprene rubber *4 | 50 | 50 |
| wax *5 | | 3 | 3 |
| calcium oxide *6 | | 5 | 5 |
| silica *7 | | 0 | 0 |
| calcium carbonate *8 | | 0 | 0 |
| oil component | aromatic oil *99 | 7.5 | 7.5 |
| | paraffinic-base oil *10 | 7.5 | 7.5 |
| | naphthenic-base oil *11 | 0 | 0 |
| cobalt compound *12 | | 3 | 3 |
| magnesium oxide *13 | | 2 | 2 |
| carbon black *14 | | 50 | 50 |
| stearic acid *15 | | 1 | 1 |
| zinc flower *16 | | 5 | 5 |
| sulfur *17 | | 2 | 2 |
| age resistor *18 | | 2 | 2 |
| vulcanization accelerator *19 | | 1 | 1 |
| factice *20 | | 0 | 5 |
| appearance condition | | good | good |
| wax bloom amount (mg) | | 1.6 | 1.6 |
| ozone resistance | | normal | normal |
| adhesiveness to brass-plated wire (%) | | 100 | 100 |
| whitening caused during sah bath vulcanization | | whitened | not whitened |

| | | | |
|---|---|---|---|
| *1 natural rubber: RSS#1 *2 butadiene rubber: "JSR-BR01" manufactured by JSR Corporation *3 styrene-butadiene rubber: "JSR-1500" manufactured by JSR Corporation *4 chloroprene rubber: "Denka Chloroprene M-40" manufactured by Denki Kagaku Kogyo (Denka) Company Limited *5 wax: "SUNTIGHT (registered trademark) S" manufactured by Seiko Chemical Co., Ltd., refined wax *6 calcium oxide: "CML (registered trademark) #21" manufactured by Ohmi Chemical Industry Co., Ltd. *7 silica: "Nipsil (registered trademark) AQ" manufactured by Tosoh Silica Corporation *8 calcium oxide: "NS#100" manufactured by Nitto Funka Kogyo K.K. *9 aromatic oil: "Kou Molex (registered trademark) 300" manufactured by JX Nippon Oil & Energy Corporation *10 paraffinic-base oil: "SUPER OIL Y22" manufactured by JX Nippon Oil & Energy Corporation *11 naphthenic-base oil: "Sunthene 4240" manufactured by SUN REFINING AND MARKETING COMPANY *12 cobalt compound: "DICNATE (registered trademark) 5000" manufactured by DIC Corporation, cobalt decandate (neodecanoic acid, cobalt salt) *13 magnesium oxide: "KYOWAMAG (registered trademark) 30" manufactured by Kyowa Chemical Industry Co., Ltd. *14 carbon black: "Asahi #60" manufactured by Asahi Carbon Co., Ltd., FEF class *15 stearic acid: "stearic acid 50S" manufactured by New Japan Chemical Co., Ltd. *16 zinc flower: "Ginrei (registered trademark) SR" manufactured by Toho Zinc Co., Ltd., zinc oxide *17 sulfur: "SULFAX5" manufactured by Tsurumi Chemical Industry Co., ltd., 5% oil-treated sulfur *18 age resistor: "Noclack 6C" manufactured by Ouchi Shinko Chemical Industrial Co., Ltd. *19 vulcanization accelerator: "Nocceler CZ" manufactured by Ouchi Shinko Chemical Industrial Co., Ltd. *20 factice: "Brown Factice" manufactured by Tenma Factice Mfg. Co. LTD., sulfur factice | | | |

As can be seen from the results provided in Tables 1, 2, the rubber composition according to an embodiment which contains wax and calcium oxide, in which the wax is contained at 1 part by mass or more per 100 parts by mass of the rubber component, and the calcium oxide is contained at 0.5 parts by mass or more and 10 parts by mass or less, is excellent in ozone resistance, and has good appearance with wax bloom being suppressed, and exhibits high adhesiveness to brass-plated wire.

Further, as can be seen from the results provided in Table 3, among the rubber compositions of Embodiments, the rubber composition further containing factice is capable of suppressing whitening even if vulcanized by means of salt bath vulcanization.

In contrast thereto, the rubber composition according to Comparative Example 1 without containing calcium oxide, the rubber composition of Comparative Example 3 containing silica in place of calcium oxide, and the rubber composition of Comparative Example 4 containing calcium carbonate in place of calcium oxide all have a larger amount of wax bloom and thus deteriorated in appearance condition.

The rubber composition according to Comparative Example 2, which contains calcium oxide at more than 10 parts by mass per 100 parts by mass of the rubber component, has relatively favorable ozone resistance and appearance, but is deteriorated in adhesiveness to brass-plated wire.

Further, the rubber composition according to Comparative Example 5, which contains wax at less than 1 part by mass per 100 parts by mass of the rubber component, is low in ozone resistance.

### INDUSTRIAL APPLICABILITY

The rubber composition as disclosed herein is excellent in ozone resistance, and capable of suppressing, when used in a rubber product, deterioration in appearance property of the rubber product and provides high adhesiveness to a metal member.

## Claims

1. A rubber composition containing: a rubber component including diene-based rubber; wax; and calcium oxide,
wherein:
the wax is contained at 1 part by mass or more per 100 parts by mass of the rubber component; and
the calcium oxide is contained at 0.5 parts by mass or more and 10 parts by mass or less per 100 parts by mass of the rubber component.

2. The rubber composition according to claim 1, wherein the wax is contained at 5 parts by mass or less per 100 parts by mass of the rubber component.

3. The rubber composition according to claim 1 or 2, further containing an oil component including aromatic oil.

4. The rubber composition according to claim 3, wherein the oil component includes the aromatic oil at a proportion of 30 mass% or more.

5. The rubber composition according to any one of claims 1 to 4, further containing factice, the factice being contained at 1 part by mass or more to 10 parts by mass or less per 100 parts by mass of the rubber component.

6. The rubber composition according to any one of claims 1 to 5, the rubber composition being for use as an outer surface rubber layer of a hose.
